# EUROPEAN PATENT SPECIFICATION

(11) **EP 3 919 359 B1**
(45) Date of publication and mention of the grant of the patent: **28.06.2023**
(21) Application number: 19934390.6
(22) Date of filing: 10.07.2019
(51) Int. Cl.: B62J 1/12, B60L 50/60, H01M 50/249, B60L 50/64, B60L 53/80, H01M 50/204, H01M 50/244, H01M 50/262, B62J 7/04, B62J 9/14, B62J 43/16, B62J 43/23, B62J 43/28

(54) **SADDLED ELECTRIC-POWERED VEHICLE**
ELEKTRISCH BETRIEBENES SATTELFAHRZEUG
VÉHICULE ÉLECTRIQUE À SELLE

(43) Date of publication of application: 08.12.2021
(73) Proprietor: HONDA MOTOR CO., LTD., Minato-ku Tokyo 107-8556 (JP)
(72) Inventor: SATO, Akira, Tokyo 107-8556 (JP); OKABE, Sadataka, Tokyo 107-8556 (JP)
(74) Representative: Kiwit, Benedikt
(86) International application number: PCT/JP2019/027413
(87) International publication number: WO 2021/005767

(56) References cited:
- WO-A1-2012/043518
- WO-A1-2019/064596
- CN-U- 204 137 289
- JP-A- 2002 145 150
- JP-A- 2002 240 765
- JP-A- 2003 134 610
- JP-A- 2006 224 720
- JP-A- 2011 049 151
- JP-A- 2013 091 439
- JP-A- 2013 129 348
- US-A1- 2012 145 852
- US-B2- 9 545 968

## Description

### Technical Field

The present invention relates to a saddled electric-powered vehicle, and more particularly to a saddled electric-powered vehicle in which a portable battery for supplying electric power to a motor as a drive source is detachably housed in a vehicle body.

### Background Art

In the past, a saddled electric-powered vehicle in which portable batteries for supplying electric power to a motor is detachably housed in a vehicle body has been knowr

WO 2019/064596 A1 discloses all of the features of the preamble of claim 1.

Patent Literature 1 discloses a configuration in which two portable batteries each formed in an approximately rectangular parallelepiped shape are housed in a housing case provided below an opening/closing seat in a scooter-type electric-powered motorcycle in which a low floor is provided between a steering handlebar and the seat.

Patent Literature 2 discloses an electric two-wheel vehicle, which includes a battery case that accommodates two batteries. The battery case is open in an upward direction. A head pipe supports a steering shaft and is connected to a front portion of the battery case. The battery case includes a beam portion that is disposed between the two batteries and extends rearward from a front wall portion of the battery case. Accordingly, it is possible to easily attach and detach the batteries with respect to a vehicle body for charging, protect the batteries, and secure the rigidity of a vehicle body frame.

### Citation List

### Patent Literature

Patent Literature 1: WO 2012/043518 A
Patent Literature 2: US 9 545 968 B2

### Problem to be solved by Invention

Here, in a saddled electric-powered vehicle having a large loading platform instead of a rear seat, it is conceivable that two portable batteries are arranged next to each other in a vehicle width direction in order to secure an area of the loading platform. Although such arrangement itself has been proposed even in Patent Literature 1, there has been still room for devising in terms of a concrete configuration in which all of securing a sufficient battery capacity, ease of an attaching/detaching operation of the batteries, downsizing the vehicle body, and the like can be achieved.

An object of the present invention is to solve the problem of the prior art and to provide a saddled electric-powered vehicle capable of enhancing convenience by optimizing an arrangement and a housing structure of portable batteries.

### Solution to Problem

In order to achieve the above-described object, the present invention has a first feature in that a saddled electric-powered vehicle (1) configured by including approximately rectangular parallelepiped batteries (B), a battery case (33) in which the batteries (B) are housed, battery-side terminals (49) provided on bottom surfaces of the batteries (B), and case-side terminals (55) engaged with the battery-side terminals (49), wherein the battery case (33) is arranged below a seat (29) of the saddled electric-powered vehicle (1), pressing holders (42) that press the batteries (B) housed in the battery case (33) from above are provided, and the pressing holders (42) are provided while making a front and rear pair for each battery (B).

In addition, the present invention has a second feature in that the battery case (33) has a bottomed box shape with an upper side open.

In addition, the present invention has a third feature in that each pressing holder (42) is provided with a rubber portion (42c) brought into contact with an upper surface of each battery (B).

In addition, the present invention has a fourth feature in that a rear carrier (40) for loading baggage is arranged behind the seat (29).

In addition, the present invention has a fifth feature in that an upper edge of the battery case (33) is constituted using a standing wall part (34a) that is in close contact with a lower surface of the seat (29), and, when the batteries (B) are housed in the battery case (33), the surface of each battery (B) on an outer side in a vehicle width direction and the standing wall part (34a) are disposed close to each other in a vehicle body plan view.

In addition, the present invention has a sixth feature in that the standing wall part (34a) is formed to descend forward in a vehicle body side view.

In addition, the present invention has the further feature in that the two batteries (B) are disposed next to each other in the vehicle width direction, an operation lever (36) for moving the case-side terminals (55) up and down to connect or separate the battery-side terminals (49) and the case-side terminals (55) to/from each other by being operated in an up-and-down direction of a vehicle body is provided, and the operation lever (36) is arranged at a position in a middle in the vehicle width direction between the two batteries (B).

Further, the present invention has a seventh feature in that each battery (B) is formed in an approximately rectangular parallelepiped shape that is long in the up-and-down direction and is housed in the battery case (33) while being inclined rearward with respect to a vertical direction, and a housing part (51) is provided at an upper portion of a front end of the battery case (33).

### Advantageous Effects of Invention

According to the first feature, the saddled electric-powered vehicle (1) configured by including approximately rectangular parallelepiped batteries (B), the battery case (33) in which the batteries (B) are housed, the battery-side terminals (49) provided on the bottom surfaces of the batteries (B), and the case-side terminals (55) engaged with the battery-side terminals (49), wherein the battery case (33) is arranged below the seat (29) of the saddled electric-powered vehicle (1), the pressing holders (42) that press the batteries (B) housed in the battery case (33) from above are provided, and the pressing holders (42) are provided while making a front and rear pair for each battery (B). Thus, when the batteries are pulled out outward in the vehicle width direction while being lifted upward and brought into contact with an upper end of the battery case, the batteries can smoothly be removed without interference by the pressing holders.
Accordingly, a lifting height required when attaching and detaching the batteries as heavy objects is reduced, and the batteries can be attached and detached while being inclined outward in the vehicle width direction, thereby facilitating the attaching/detaching work.

According to the second feature, since the battery case (33) has a bottomed box shape with the upper side open, it is possible to enhance the rigidity of the batter case. Accordingly, even when the batteries are pressed against the upper end of the battery case every time the batteries are attached and detached, it is possible to secure the durability of the battery case.

According to the third feature, since each pressing holder (42) is provided with the rubber portion (42c) brought into contact with the upper surface of each battery (B), the elastic force of the rubber portion enables to hold stably the housing state of the batteries.

According to the fourth feature, since the rear carrier (40) for loading baggage is arranged behind the seat (29), a lifting height required when attaching and detaching the batteries is low, and the batteries can be attached and detached while being inclined outward in the vehicle width direction. Thus, even when large baggage is loaded on the rear carrier, the batteries can be attached and detached without interference with the baggage.

According to the fifth feature, an upper edge of the battery case (33) is constituted using the standing wall part (34a) that is in close contact with the lower surface of the seat (29), and, when the batteries (B) are housed in the battery case (33), the surface of each battery (B) on the outer side in the vehicle width direction and the standing wall part (34a) are disposed close to each other in a vehicle body plan view. Thus, when the batteries are pulled out outward in the vehicle width direction while being lifted upward and, when the batteries are housed in the battery case, the outer surfaces of the batteries in the vehicle width direction can easily be brought into contact with the standing wall part of the battery case. Accordingly, the attaching/detaching work can be performed while putting the weight of the batteries on the standing wall part without completely lifting the batteries, and thus the workload is reduced.

According to the sixth feature, the standing wall part (34a) is formed to descend forward in a vehicle body side view. Thus, when the batteries are pulled out outward in the vehicle width direction while being lifted upward and when the batteries are housed in the battery case, the batteries can easily be inclined diagonally forward on the outsides in the vehicle width direction, and the attaching/detaching work of the batteries is facilitated.

According to the invention, the two batteries (B) are disposed next to each other in the vehicle width direction, the operation lever (36) for moving the case-side terminals (55) up and down to connect or separate the battery-side terminals (49) and the case-side terminals (55) to/from each other by being operated in the up-and-down direction of the vehicle body is provided, and the operation lever (36) is arranged at a position in the middle in the vehicle width direction between the two batteries (B). Thus, the operation lever for connecting or separating the battery-side terminals and the case-side terminals to/from each other can similarly be operated from either the left or right side of the vehicle body, and replacement work of the batteries is facilitated.

According to the seventh feature, each battery (B) is formed in an approximately rectangular parallelepiped shape that is long in the up-and-down direction and is housed in the battery case (33) while being inclined rearward with respect to the vertical direction, and the housing part (51) is provided at an upper portion of a front end of the battery case (33). Thus, documents and the like can be housed by using a space generated by inclining the batteries rearward, and the convenience can be enhanced.

### Brief Description of Drawings

FIG. 1 is a left side view of an electric-powered motorcycle according to an embodiment of the present invention.
FIG. 2 is a perspective view of the electric-powered motorcycle viewed from a right rear.
FIG. 3 is a left side view of the electric-powered motorcycle in a state where main exterior parts are removed.
FIG. 4 is an enlarged perspective view for illustrating a peripheral structure of a battery case.
FIG. 5 is an explanatory view of a structure in which the battery case is erased from the state of FIG. 4.
FIG. 6 is a partially enlarged plan view of the electric-powered motorcycle with the exterior parts removed.
FIG. 7 is a perspective view of the battery case with batteries removed.
FIG. 8 is a perspective view of an operation lever.
FIG. 9 is a cross-sectional perspective view for illustrating a state where the battery case is cut in a longitudinal direction.
FIG. 10 is a perspective view for illustrating a configuration of link mechanisms.
FIG. 11 is a partially enlarged view of FIG. 3.
FIG. 12 is a partially enlarged perspective view of the electric-powered motorcycle viewed from a left rear.
FIG. 13 is a bottom view of the electric-powered motorcycle with the exterior parts removed.
FIG. 14 is a cross-sectional view for illustrating a state obtained by cutting with an approximately horizontal plane so as to pass through case-side terminals.

### Description of Embodiment

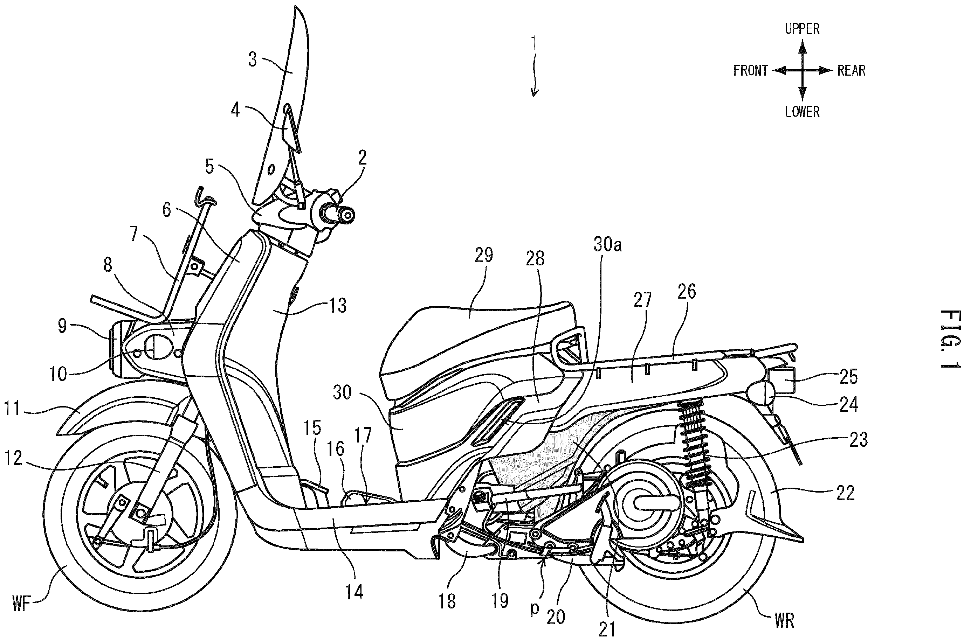

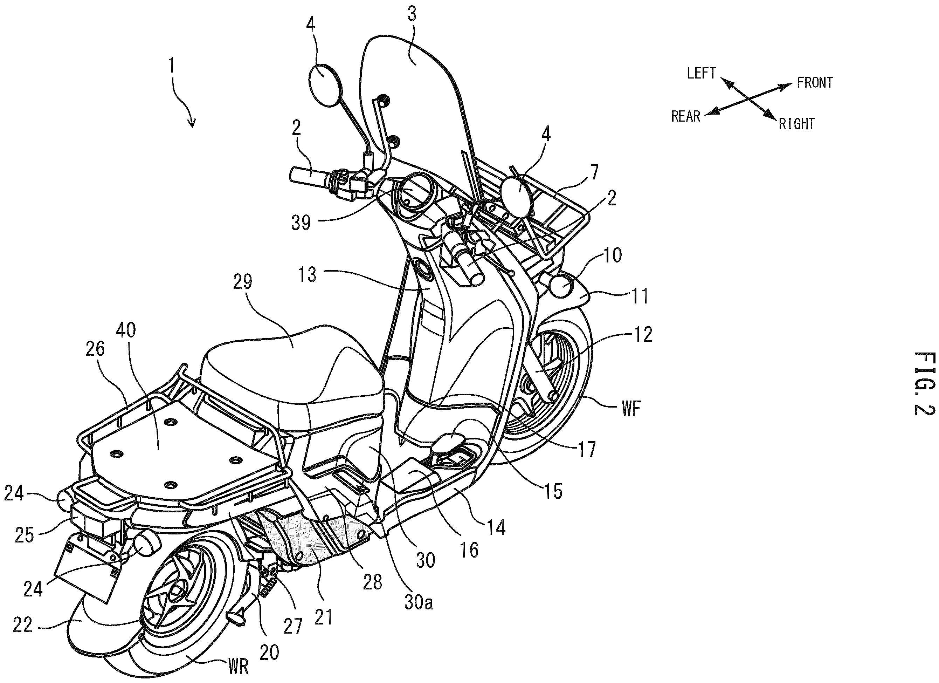

Hereinafter, a preferred embodiment of the present invention will be described in detail with reference to the drawings. FIG. 1 is a left side view of an electric-powered motorcycle 1 according to an embodiment of the present invention. In addition, FIG. 2 is a perspective view of the electric-powered motorcycle 1 viewed from a right rear. The electric-powered motorcycle 1 is what is generally called a scooter-type saddled electric-powered vehicle in which a low floor 17 for putting the feet of an occupant is provided between a steering handlebar 2 and a seat 29.

A pair of left and right front forks 12 for pivotally supporting a front wheel WF to be rotatable is swingable by the steering handlebar 2 extended in a vehicle width direction. In a handle cover 5 covering the front and rear of the steering handlebar 2, a meter device 39 is buried, and a windbreak screen 3 and a pair of left and right rearview mirrors 4 are attached. A front cover 6 on a front side of a vehicle body and a floor panel 13 facing the legs of the occupant on a rear side of the vehicle body of the front cover 6 are arranged below the handle cover 5. A front carrier 7 is supported in front of the front cover 6, and a headlight 9 and a pair of left and right front-side flasher lamps 10, which are supported by a light stay 8, are arranged therebelow. A front fender 11 covering above the front wheel WF is supported by the left and right front forks 12.

A brake pedal 15 for actuating a brake device of a rear wheel WR and a foot rest 16 for enhancing the operability of the brake pedal 15 are arranged on an upper surface of the low floor 17. A pair of left and right undercovers 14 covering the low floor 17 from below is coupled to left and right ends of the low floor 17. A seat lower cover 30 having a curved shape projecting on the front side of the vehicle body is arranged below the seat 29 on which a driver sits. A floor upper cover 28 continued to an upper portion of the low floor 17 is coupled to a lower portion of the seat lower cover 30.

A side stand 19 is arranged on the rear side of the vehicle body of the undercover 14 on the left side in the vehicle width direction. A pair of left and right rear covers 27 is arranged behind the floor upper cover 28, and a rear carrier 40 surrounded by a grip pipe 26 is arranged at upper portions of the rear covers 27. A taillight device 25 and a pair of left and right rear-side flasher lamps 24 are arranged behind the rear covers 27.

A swing unit type power unit P for pivotally supporting the rear wheel WR to be rotatable is arranged behind the undercovers 14. The power unit P incorporating a motor for driving the rear wheel WR is swingably attached to a vehicle body frame through a link lever 18. A rear portion of the power unit P is suspended from the vehicle body frame by a rear cushion 23. A rear fender 22 covering an upper rear of the rear wheel WR is attached to an upper portion of the power unit P, and a center stand 20 is attached to a lower portion of the power unit P.

A cover member 21 (a gray colored part illustrated in the drawing) for receiving a traveling wind introduced from a slit 30a of the floor upper cover 28 and a traveling wind flowing inside the undercovers 14 is arranged at a position between the seat lower cover 30 and the rear fender 22.

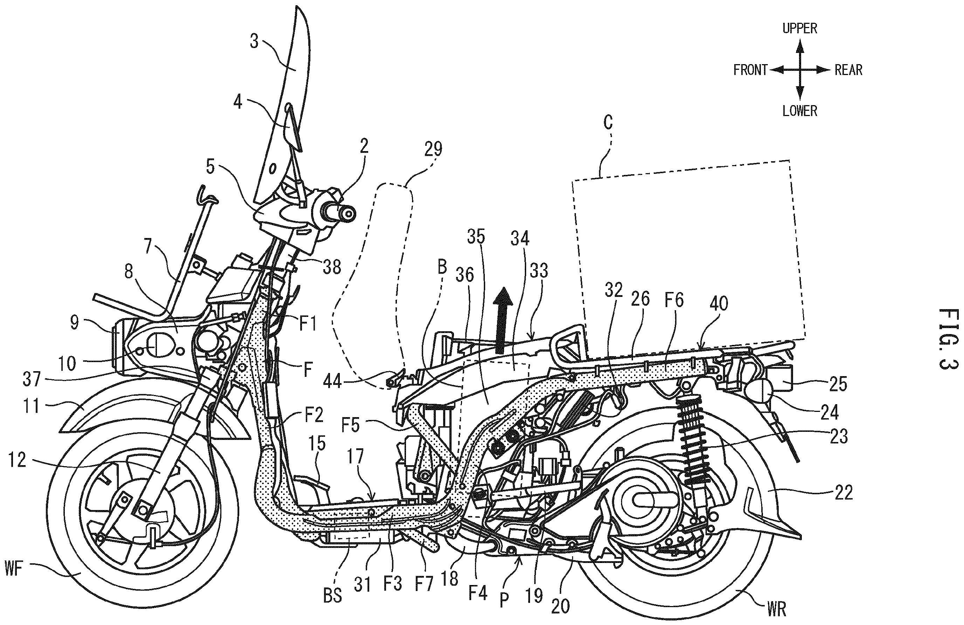

FIG. 3 is a left side view of the electric-powered motorcycle 1 in a state where main exterior parts are removed. A vehicle body frame F (a stippled hatching part illustrated in the drawing) of the electric-powered motorcycle 1 includes a main frame F2 in a middle in the vehicle width direction extending downward from a head pipe F1, a pair of left and right underframes F3 coupled to a lower end of the main frame F2 and curved rearward, rising frames F4 directed upward and rearward from rear ends of the underframes F3, and a pair of left and right rear frames F6 continued to the rising frames F4 and extending rearward. A cross pipe F5 for coupling the left and right rising frames F4 to each other is coupled to front portions of the rising frames F4.

A steering stem 38 is pivotally supported to be rotatable by the head pipe F1. The steering handlebar 2 is fixed to an upper end of the steering stem 38, and a bottom bridge 37 for supporting upper ends of the front forks 12 is fixed to a lower end of the steering stem 38. A battery case 33 for housing two portable batteries B, which supply electric power to the motor, next to each other in the vehicle width direction is arranged below the seat 29. The battery case 33 includes a vertically long lower-side case 35 matching the shapes of the batteries B and an upper-side case 34 coupled to an upper portion of the lower-side case 35 and forming an opening matching the bottom shape of the seat 29. The seat 29 is pivotally supported to be openable and closable by a hinge 44 positioned at an upper portion of a front end of the battery case 33, and functions as an opening and closing cover of the battery case 33. In the drawing, the seat 29 in an open state is illustrated by a two-dotted chain line.

The battery case 33 is housed between the pair of left and right rising frames F4 behind the cross pipe F5. The seat lower cover 30 (see FIGS. 1 and 2) extends from the front of the cross pipe F5 up to the sides of the left and right rising frames F4 so as to cover the front and sides of the battery case 33. A housing case 31 for housing electric components such as a low-voltage sub-battery BS, which supplies electric power to auxiliaries such as the headlight 9, and a fuse is arranged below the low floor 17. A coupling pipe F7 for coupling the left and right underframes F3 to each other to enhance rigidity and protecting the housing case 31 is arranged at lower portions of the underframes F3.

The cover member 21 (see FIGS. 1 and 2) for receiving a traveling wind from the front of the vehicle body in front of the rear fender 22 is arranged on the rear surface side of the battery case 33, and a PCU (power control unit) 32 for controlling electric power supply to the motor is arranged at a position covered with the cover member 21 near the upper side on the rear surface side of the battery case 33.

Each battery B is formed in an approximately rectangular parallelepiped shape that is long in the up-and-down direction and is housed in the battery case 33 in a state of being inclined slightly rearward with respect to the vertical direction. Accordingly, the height dimension of the battery case 33 is suppressed, and the position of the center of gravity is lowered to facilitate attaching/detaching work of the batteries B. In addition, by inclining the batteries B, the pull-out direction (an arrow illustrated in the drawing) when the batteries B are taken out from the battery case 33 is also inclined slightly rearward, but the inclination angle is in a range where the batteries B do not interfere with baggage C even in a state where the large baggage C is loaded on the rear carrier 40.

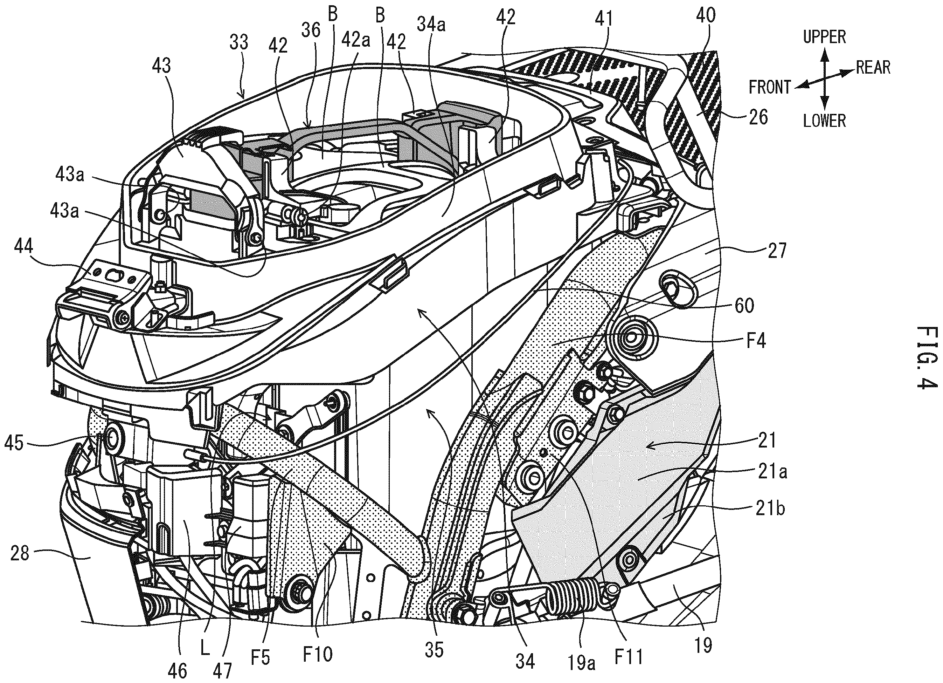

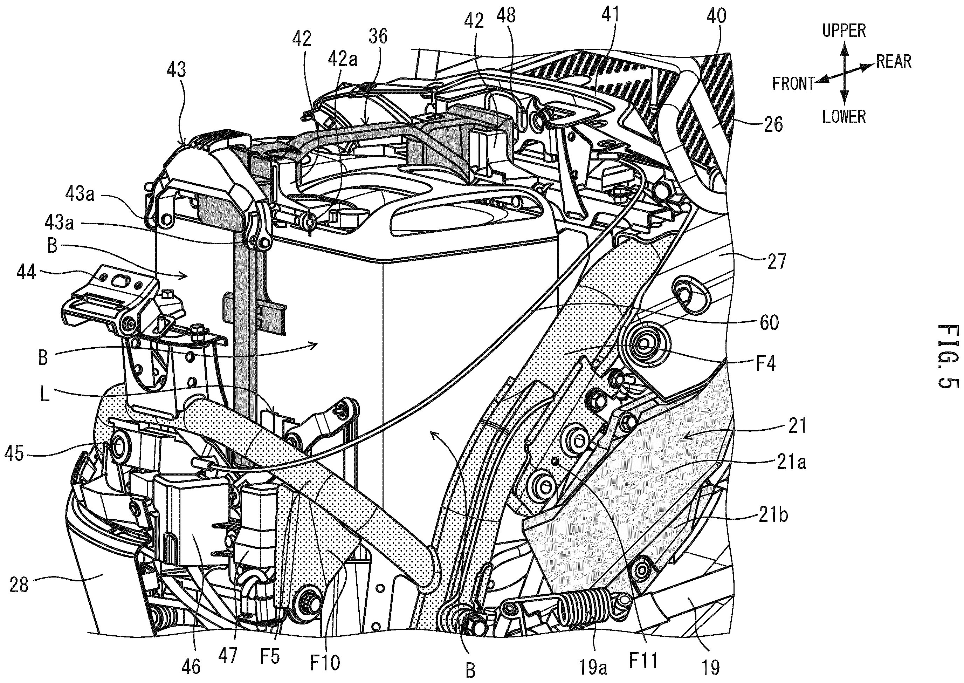

FIG. 4 is an enlarged perspective view for illustrating a peripheral structure of the battery case 33. FIG. 4 illustrates a state where the seat 29 and the seat lower cover 30 are removed and the left half of the floor upper cover 28 is removed. In addition, FIG. 5 is an explanatory view of a structure in which the battery case 33 is erased from the state of FIG. 4.

An operation lever 36 manually gripped by a worker and moved up and down is arranged between the two batteries B housed in the battery case 33. In a state where the operation lever 36 is pushed downward and battery-side terminals and case-side terminals are connected to each other, pressing holders 42 pivotally supported to be swingable by swing axes 42a are brought into contact with the upper surfaces of the batteries B with urging force, and the up and down movement of the batteries B can accordingly be suppressed even when riding across a large step during traveling.

A locking member 43 for holding the operation lever 36 in a state of being pushed downward is arranged in front of the operation lever 36. The locking member 43 is pivotally supported by the upper-side case 34 through swing axes 43a and is switched to the unlocked state by being tilted forward from the erected state illustrated in the drawing.

A standing wall part 34a constituting an upper edge of the battery case 33 is formed to descend forward along the shape of the bottom surface of the seat 29. Accordingly, when the seat 29 is opened, the locking member 43 positioned near the front and the operation lever 36 can easily be accessed, and the work of pulling out and inserting the batteries B is also facilitated.

The battery case 33 is supported so as to be sandwiched between the left and right rising frames F4. The rising frames F4 are provided with a pair of left and right tandem step holders F11, and the cross pipe F5 curved in an approximately U-shape projecting upward and coupling the left and right rising frames F4 to each other is arranged at a position in front of the lower side of the tandem step holders F11.

Referring to FIG. 5, a pair of front and rear link mechanisms L for converting the up and down movement of the operation lever 36 to the up and down movement of the case-side terminals is arranged in front of and behind the lower-side case 35 of the battery case 33. A key cylinder 45 for actuating a seat catch mechanism 48 arranged at an upper portion of a rear end of the battery case 33 is arranged at a position covered with the seat lower cover 30 below the hinge 44. A rear cover 41 covers above the seat catch mechanism 48, and a cable 60 extending from the key cylinder 45 is connected to the left side of the seat catch mechanism 48 in the vehicle width direction. A contactor 46 for turning on and off electric power supply to the electric components is arranged below the key cylinder 45. The cross pipe F5 has a function of enhancing frame rigidity by coupling the left and right rising frames F4 to each other, enhancing a protection function on the side surface sides of the battery case 33, and protecting the link mechanism L disposed adjacent to the front surface of the battery case 33 and the electric components such as the contactor 46. In addition, a harness for connecting the batteries B and the contactor 46 to each other can be shortened by disposing the contactor 46 at a position near the batteries B.

A pair of left and right plate-like support stays F10 for supporting the front surface side of the battery case 33 below the link mechanisms L is provided on the lower surface of the cross pipe F5 made of a steel pipe. The lateral sides of the electric components positioned below and behind the cross pipe F5 are also protected by the support stays F10.

A front end of the cover member 21 is arranged behind the tandem step holders F11. The cover member 21 is provided with a wide-width part 21a covering from the sides of the battery case 33 up to the rear of the PCU 32 and a narrow-width part 21b coupled to a lower portion of the wide-width part 21a and formed narrower in width than the wide-width part 21a.

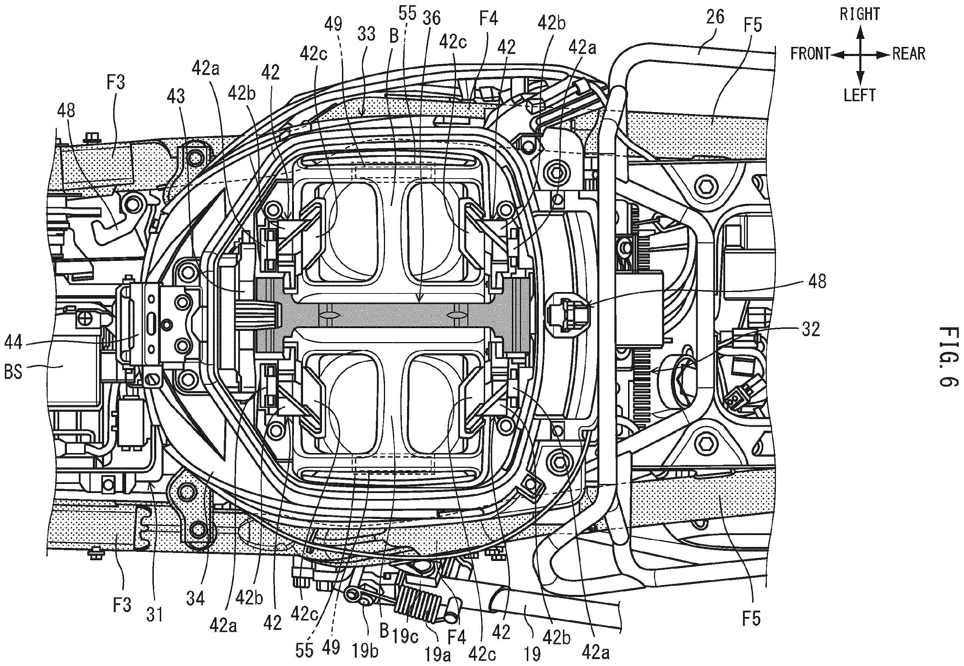

FIG. 6 is a partially enlarged plan view of the electric-powered motorcycle 1 with the exterior parts removed. The two batteries B are arranged next to each other on the left and right sides, and the operation lever 36 whose grip part extends in the longitudinal direction is arranged at a position in the middle in the vehicle width direction between the left and right batteries B. The pressing holders 42 that press the upper surfaces of the batteries B are provided while making a front and rear pair for one battery B. Each pressing holder 42 has a metal main body part 42b pivotally supported to be swingable by the swing axis 42a, and a rubber portion 42c covering the distal end side of the main body part 42b. The elastic force of each rubber portion 42c enables to stably hold the housing state of the batteries B.

Urging force on one side is applied by an urging member to the pressing holders 42 pivotally supported to be swingable by the swing axes 42a, and the pressing holders 42 are constituted so as to erect in the vertical direction by being pushed up by the operation lever 36 after pulling up the operation lever 36 while pressing the upper surfaces of the batteries B by the urging force in a state where the operation lever 36 is pushed down.

In the present embodiment, since the pair of front and rear pressing holders 42 is provided for each battery B, when the batteries B are pulled out outward in the vehicle width direction while being lifted upward and brought into contact with the standing wall part 34a of the battery case 33, the batteries B can smoothly be removed without interference by the pressing holders 42. Accordingly, a lifting height required when attaching and detaching the batteries B as heavy objects is reduced, and the batteries B can be attached and detached while being inclined outward in the vehicle width direction, thereby facilitating the attaching/detaching work.

A battery-side terminal 49 provided at a bottom portion of each battery B is arranged on the outer side of each battery B in the vehicle width direction. Accordingly, the operation lever 36 for allowing case-side terminals 55 positioned below the battery-side terminals 49 to move up and down can similarly be operated from either the left or right side of the vehicle body, and thus replacement work of the batteries B is facilitated. In addition, a space for providing the link mechanisms L interlocking the operation lever 36 and the case-side terminals can be secured by arranging the operation lever 36 and the case-side terminals 55 while being apart from each other.

The rising frames F4 coupled to the underframes F3 for supporting the low floor 17 from below have a shape in which a lateral interval is widened according to the shape of the battery case 33 at rising parts from the underframes F3. A pivot 19b of the side stand 19 supported by the rising frame F4 on the left side in the vehicle width direction is provided at a part where the rising frame F4 swells outward in the vehicle width direction. Accordingly, by pivotally supporting the side stand 19 on the outer side of the vehicle body frame F in the vehicle width direction, when the vehicle is stopped using the side stand 19, the ground contact surface is positioned on the outer side in the vehicle width direction to enhance the stability of the vehicle body, and unfolding and storage operations of the side stand 19 are facilitated. Return springs 19a for biasing the side stand 19 to an unfolded state and a stored state are provided outside and inside the side stand 19 while making a pair.

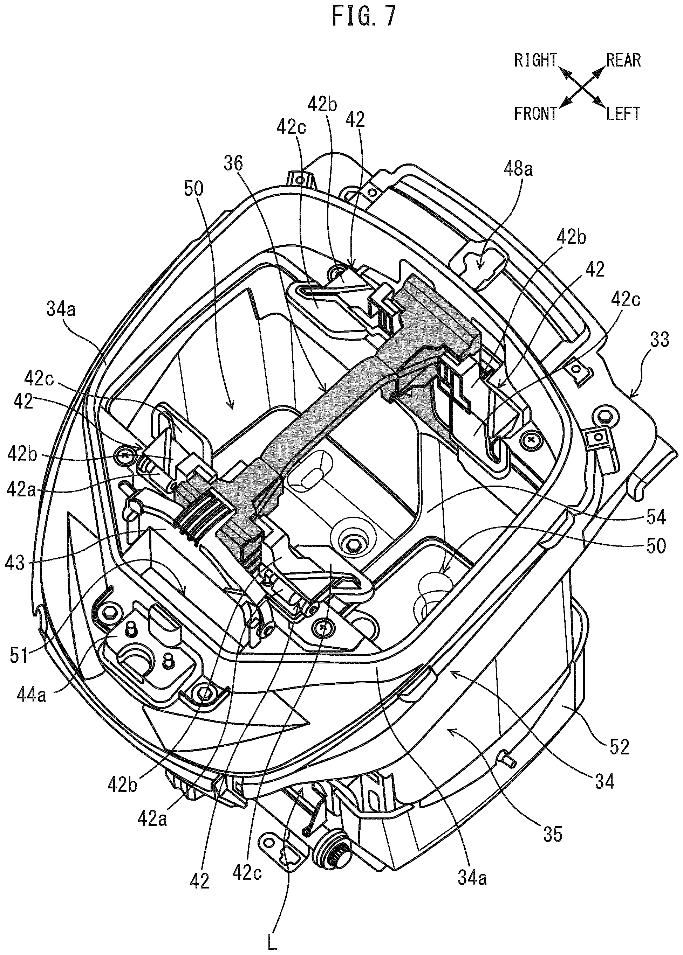

FIG. 7 is a perspective view of the battery case 33 with the batteries B removed. In the battery case 33 formed by combining the upper-side case 34 and the lower-side case 35 with each other, housing parts 50 into which the two batteries B disposed close to each other in the vehicle width direction are inserted are formed. The battery case 33 has a bottomed box shape with the upper side open, and the rigidity is enhanced. Accordingly, it is possible to enhance the durability of the battery case 33 in which the batteries B are pressed against the standing wall part 34a of the upper-side case 34 every time the batteries B are attached and detached.

A partition 54 for preventing the left and right batteries B from coming into contact with each other is provided at a bottom portion of the housing parts 50. The partition 54 extends upward up to the height of approximately half the lower-side case 35 along front and rear inner walls of the housing parts 50. According to the partition 54, it is possible to stably hold the batteries B by preventing the two batteries B housed in the battery case 33 from coming into contact with each other on the bottom side. In addition, insertion work of the batteries B is facilitated by allowing the partition 54 to function as a guide when the batteries B are inserted into the battery case 33.

A pedestal 44a to which the hinge 44 is attached is provided at a front end of the upper-side case 34. A deep groove part 51 capable of housing documents and the like is provided between the pedestal 44a and the locking member 43. The deep groove part 51 is provided by using a space generated by inclining the batteries B rearward with respect to the vertical direction.

As described above, the operation lever 36 manually gripped by a worker and moved up and down is arranged between the left and right batteries B. When the operation lever 36 is pulled up upward, the batteries B can be detached from the battery case 33. On the other hand, when the operation lever 36 is pushed down, battery-side terminals 49 and case-side terminals 55 are electrically connected to each other and the batteries B are held at predetermined positions.

The pressing holders 42 that press the upper surfaces of the batteries B are provided while making a front and rear pair for each of the left and right housing parts 50. Each battery B is formed in an approximately rectangular parallelepiped shape that is long in the up-and-down direction of the vehicle body, and the surfaces directed outward in the vehicle width direction among six surfaces constituting each battery B are formed in a curved shape projecting outward in the vehicle width direction in a vehicle body plan view. Accordingly, while maximizing the battery capacity, the insertion work can be facilitated by easily grasping the insertion direction of the batteries B. In addition, since the surface brought into contact with an upper end of the standing wall part 34a of the battery case 33 when each battery B is attached and detached is curved, frictional resistance when the weight of each battery B is put on the upper end of the standing wall part 34a of the battery case 33 is small, and smooth attaching/detaching work can be performed.

Further, when the batteries B are housed in the battery case 33, the outer surfaces of the batteries B in the vehicle width direction and the standing wall part 34a of the battery case 33 are disposed close to each other in a vehicle body plan view. Accordingly, when the batteries B are pulled out outward in the vehicle width direction while being lifted upward and when the batteries B are housed in the battery case 33, the outer surfaces of the batteries B in the vehicle width direction can easily be brought into contact with the standing wall part 34a of the battery case 33. Accordingly, the attaching/detaching work can be performed while putting the weight of the batteries B on the standing wall part 34a without completely lifting the batteries B, and thus the workload is reduced. As illustrated in FIG. 4, since the standing wall part 34a is formed to descend forward in a vehicle body side view, when the batteries B are pulled out outward in the vehicle width direction while being lifted upward and when the batteries B are housed in the battery case 33, the batteries B can easily be inclined diagonally forward on the outsides in the vehicle width direction, and the attaching/detaching work of the batteries B is facilitated.

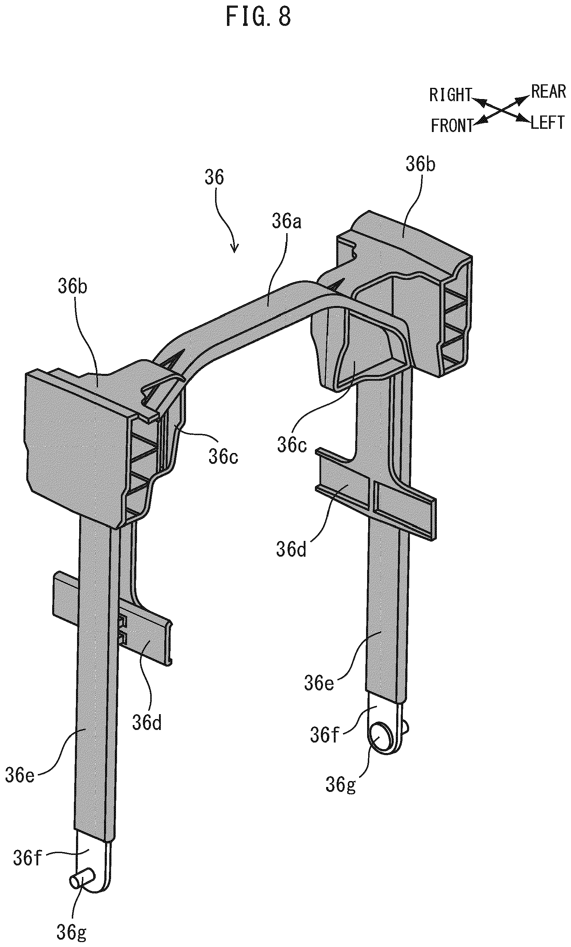

FIG. 8 is a perspective view of the operation lever 36. The operation lever 36 made of synthetic resin or the like has a longitudinally and bilaterally symmetrical shape. A grip part 36a for moving the operation lever 36 up and down and coupling rods 36e extending downward to actuate the link mechanisms L are coupled to each other by coupling blocks 36b having a hollow structure. The locking member 43 is engaged with the upper surface of the coupling block 36b on the front side to restrict upward movement of the operation lever 36.

Rectangular engagement plates 36d are provided approximately in the middles of the coupling rods 36e in the up-and-down direction such that when the operation lever 36 is pulled up, the engagement plates 36d are brought into contact with the lower surfaces of the pressing holders 42 to allow the pressing holders 42 to erect in the vertical direction. In addition, metal stays 36f for supporting pins (first axes) 36g connected to the link mechanisms L are fixed to lower ends of the coupling rods 36e by insert molding.

A pair of front and rear separator parts 36c inserted between the left and right batteries B when the operation lever 36 is pushed down is provided at positions inside the coupling blocks 36b between the grip part 36a and the coupling rods 36e. Accordingly, the operation lever 36 can also function as a partition plate for stably holding the two batteries B at predetermined positions while preventing the two batteries B disposed close to each other from coming into contact with each other.

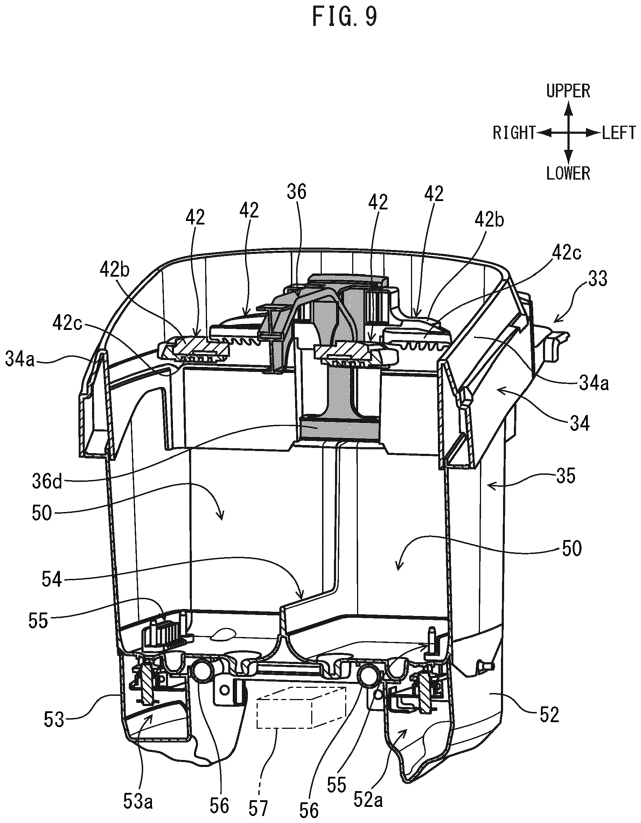

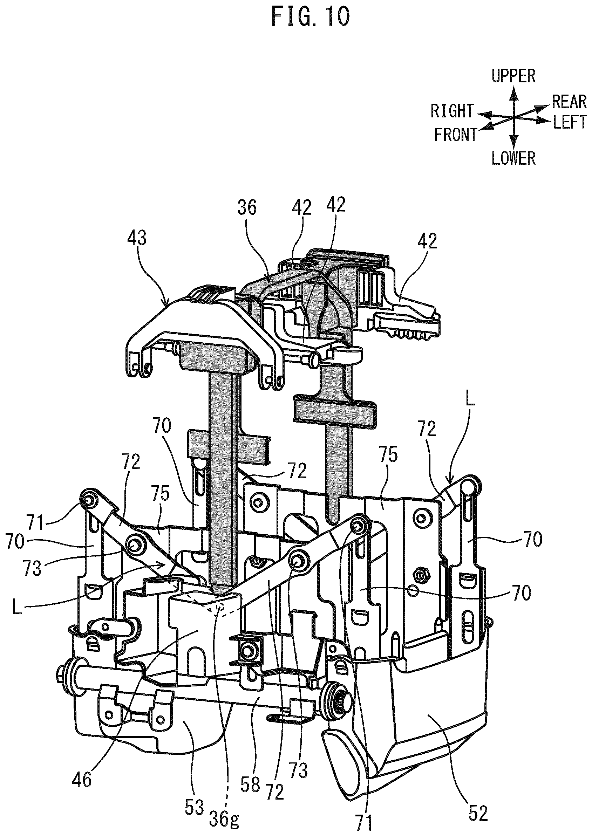

FIG. 9 is a cross-sectional perspective view for illustrating a state where the battery case 33 is cut in the longitudinal direction. In addition, FIG. 10 is a perspective view for illustrating a configuration of the link mechanisms L. As described above, the standing wall part 34a of the upper-side case 34 forming an opening of an upper portion of the battery case 33 is shaped to descend forward in a vehicle body side view. Accordingly, the operation lever and the pressing holders 42 are protected by the standing wall part 34a on the rear side, and the operation lever 36 and the locking member 43 can easily be accessed from the outside in the vehicle width direction on the front side.

The coupling rods 36e of the operation lever 36 are guided outside the lower-side case 35 through an opening provided in the lower-side case 35 and are connected to the pair of front and rear link mechanisms L, respectively, arranged in front of and behind the lower-side case 35. The partition 54 continued from a bottom portion of the housing parts 50 extends up to lower portions of the engagement plates 36d when the operation lever 36 is pushed down up to a predetermined position.

A left-side terminal cover 52 and a right-side terminal cover 53 that house the case-side terminals 55 moving up and down according to the operation of the link mechanisms L are attached to lower portions of the lower-side case 35. In addition, a pair of left and right support pipes 56 for supporting the battery case 33 from below is arranged at lower portions of the lower-side case 35 between the left-side terminal cover 52 and the right-side terminal cover 53.

The left and right case-side terminals 55 are arranged according to the positions of the battery-side terminals 49 arranged on the outer sides in the vehicle width direction, and the case-side terminals 55 project upward from bottom portions of the lower-side case 35 by pushing down the operation lever 36 to be connected to the battery-side terminals 49 while move below the bottom portions of the lower-side case 35 by pulling up the operation lever 36. In this manner, the case-side terminals 55 are arranged while projecting below the bottom portions of the battery case 33, so that the vertical dimension of the battery case 33 can be reduced.

In addition, the left-side terminal cover 52 and the right-side terminal cover 53 forming housing spaces 52a and 53a of the case-side terminals 55 are arranged apart from each other in the vehicle width direction. Accordingly, the battery-side terminals 49 and the case-side terminals 55 are arranged apart from each other, the operation lever 36 is arranged in the middle in the vehicle width direction to enable a similar operation from either the left or right side of the vehicle body, and spaces where the link mechanisms L for interlocking the operation lever 36 and the case-side terminals 55 are arranged can be secured.

In the present embodiment, a space secured between the left-side terminal cover 52 and the right-side terminal cover 53 is used to arrange a down regulator 57. In other words, the down regulator 57 is arranged between the left and right case-side terminals 55 below the lower-side case 35. Accordingly, the layout efficiency can be enhanced, and a harness connected to the down regulator 57 can be shortened. Further, a space between the left-side terminal cover 52 and the right-side terminal cover 53 serves as a passage for a traveling wind passing inside the undercovers 14, and thus the down regulator 57 can efficiently be cooled.

Referring to FIG. 10, the pair of front and rear link mechanisms L is arranged on the front and rear surfaces of the battery case 33. Accordingly, it is possible to stably move the case-side terminals 55 up and down. In addition, by arranging the link mechanisms L in front of and behind the battery case 33, the dimension around the battery case 33 in the vehicle width direction can be reduced, and the link mechanisms L can be protected even when external force is applied from the side of the vehicle body. In addition, the link mechanisms L have a bilaterally symmetrical structure with the middle in the vehicle width direction as the center, synchronize the operations of the left and right case-side terminals 55, and can excellently move the terminals up and down by one operation lever.

The link mechanisms L have a configuration in which terminal support arms 70 for supporting the case-side terminals 55 are moved up and down by link arms 72 coupled to lower ends of the operation lever 36. The link arms 72 are pivotally supported to be swingable by base plates 75 through third axes 73 that function as fulcrums. Ends of the link arms 72 on the central side in the vehicle width direction are supported by the operation lever 36 through the first axes 36g that function as force points. On the other hand, ends of the link arms 72 on the outsides in the vehicle width direction are supported by the terminal support arms 70 through second axes 71 that function as working points. In the present embodiment, the third axis 73 is provided nearer the second axis 71 than the middle of each link arm 72 to increase the lever ratio of the link mechanisms L, and the operation load of the operation lever 36 is reduced. A support pipe 58 fixed to the support stays F10 provided on the lower surface of the cross pipe F5 is arranged in front of the left-side terminal cover 52 and the right-side terminal cover 53.

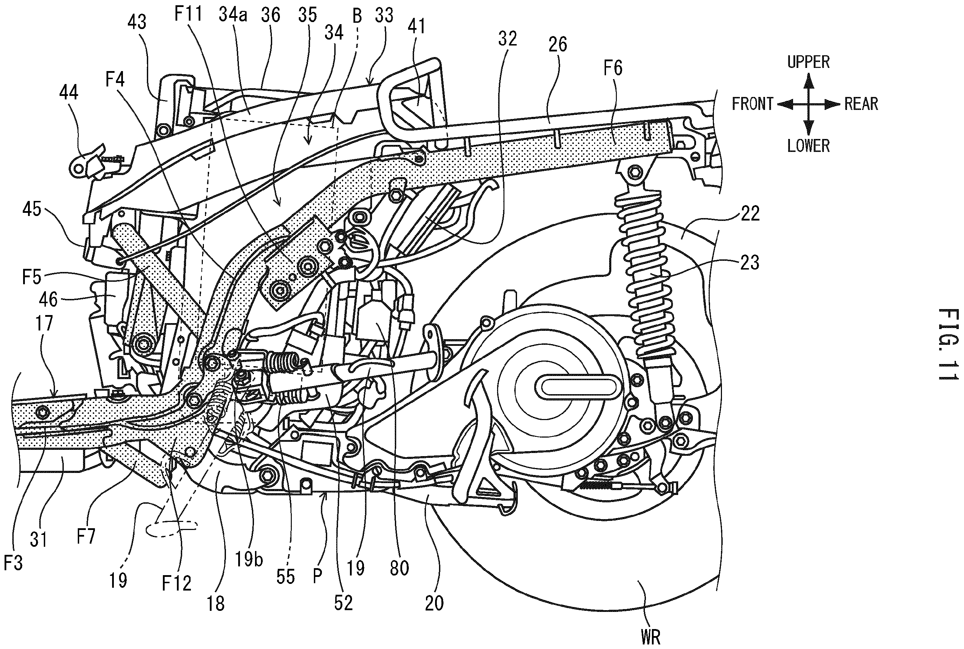

FIG. 11 is a partially enlarged view of FIG. 3. A support plate F12 for swingably supporting the power unit P to the vehicle body frame through the link lever 18 is provided at a lower portion of a rear end of the underframe F3 at a position below the pivot 19b of the side stand 19.

As described above, the batteries B are housed while being inclined rearward with respect to the battery case 33, and the standing wall part 34a forming an upper edge of the battery case 33 has a shape inclined to descend forward. At this time, when the batteries B are pulled out upward to some extent, the batteries B can be inclined diagonally forward on the outsides in the vehicle width direction while allowing the batteries B to be brought into contact with the upper edge of the standing wall part 34a, and the batteries B can be removed without being lifted completely while keeping the upright states of the batteries B, thus reducing the workload. In contrast, in the case of inserting the batteries B, if the batteries B are lifted up to a position where the side surfaces of the batteries B are brought into contact with the upper edge of the standing wall part 34a, the weight of the batteries B can be put on the standing wall part 34a, and the insertion operation can be continued, thus reducing the workload.

As described above, the pivot 19b of the side stand 19 is arranged at a position where the rising frame F4 swells outward in the vehicle width direction. This position is a position falling within the longitudinal length of the batteries B in a vehicle body side view. Accordingly, the load applied to the pivot 19b can be reduced by arranging the side stand 19 in the vicinity of the batteries B as heavy objects.

In addition, the pivot 19b is provided at a position near the lower side of the rising frame F4. Accordingly, the stability when the vehicle is stopped is enhanced by the side stand 19 supported at the position outside the battery case 33 in the vehicle width direction, and the total length of the side stand 19 can be suppressed by supporting the side stand 19 at the position near the lower side of the rising frame F4.

Further, the pivot 19b is arranged at the same height as the low floor 17, and, when the side stand 19 is stored, the orientation of the side stand 19 is in line with the orientation of the upper surface of the low floor 17. Accordingly, the stored side stand 19 is positioned at the same height as the low floor 17, and thus unfolding and storage operations while riding are facilitated. In addition, since the pivot 19b is provided at a position overlapping the case-side terminals 55 in a vehicle body side view, the pivot 19b and the rising frame F4 to which the pivot 19b is fixed can protect the case-side terminals 55 even when external force is applied from the outside in the vehicle width direction.

The PCU 32 as a heavy object is disposed close to a rear upper portion of the battery case 33, and a junction box 80 to which plural high-voltage harnesses are connected is arranged below the PCU 32. The down regulator 57 is disposed close to a lower portion of the battery case 33, the pair of front and rear link mechanisms L (see FIG. 10) is arranged in front of and behind the battery case 33, and further the contactor 46 is arranged in front of the link mechanism L on the front side. In this manner, the stability when the vehicle is stopped can be enhanced by concentratedly disposing the plural electric components around the battery case 33, in other words, around the pivot 19b of the side stand 19. In addition, since no electric components are disposed on the sides of the battery case 33, the swelling amounts of the rising frames F4 toward the outsides in the vehicle width direction are suppressed, and an increase in dimension in the vehicle width direction is prevented.

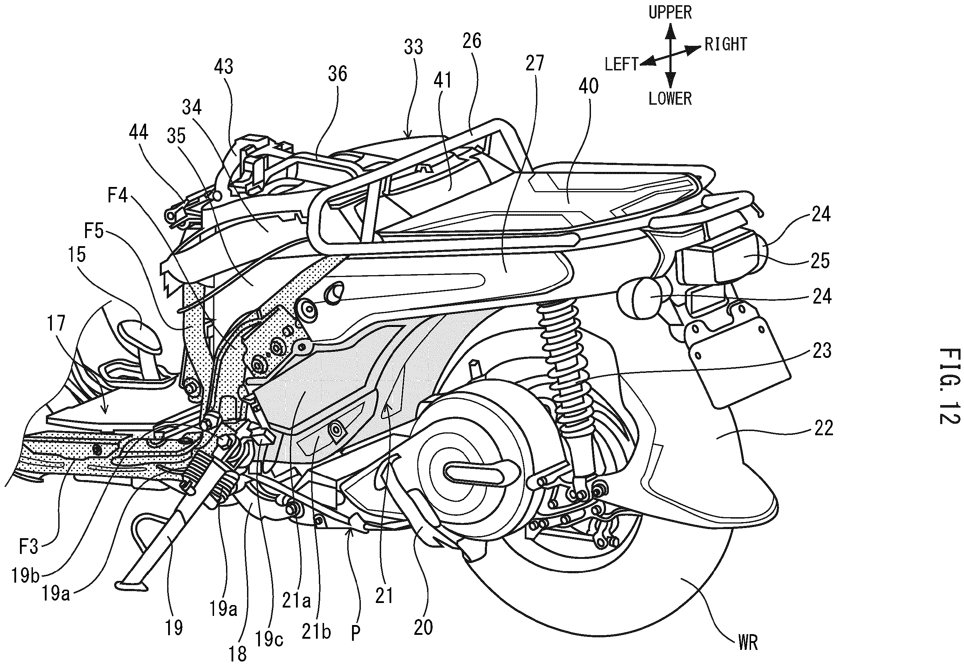

FIG. 12 is a partially enlarged perspective view of the electric-powered motorcycle 1 viewed from the left rear. By providing the pivot 19b at a position near the lower side of the rising frame F4, the side stand 19 can support the vehicle body on the side of the battery case 33 having a heavy weight while suppressing the total length of the stand bar part. Accordingly, even when baggage having a heavy weight is loaded on the rear carrier 40, the vehicle can stably be stopped by the side stand 19. A stopper 19d for regulating the storage position of the side stand 19 is provided behind the pivot 19b.

As described above, the cover member 21 covering a rear lower portion of the battery case 33 is provided with the wide-width part 21a positioned above the stored side stand 19 and the narrow-width part 21b coupled to a lower portion of the wide-width part 21a and having a dimension smaller than the wide-width part 21a in the vehicle width direction. Accordingly, by providing the narrow-width part 21b for widening the interval between the cover member 21 and the side stand 19 in the range where the side stand 19 swings, the possibility that a foot comes into contact with the cover member 21 when operating the side stand 19 is reduced, and the operability of the side stand 19 can be enhanced.

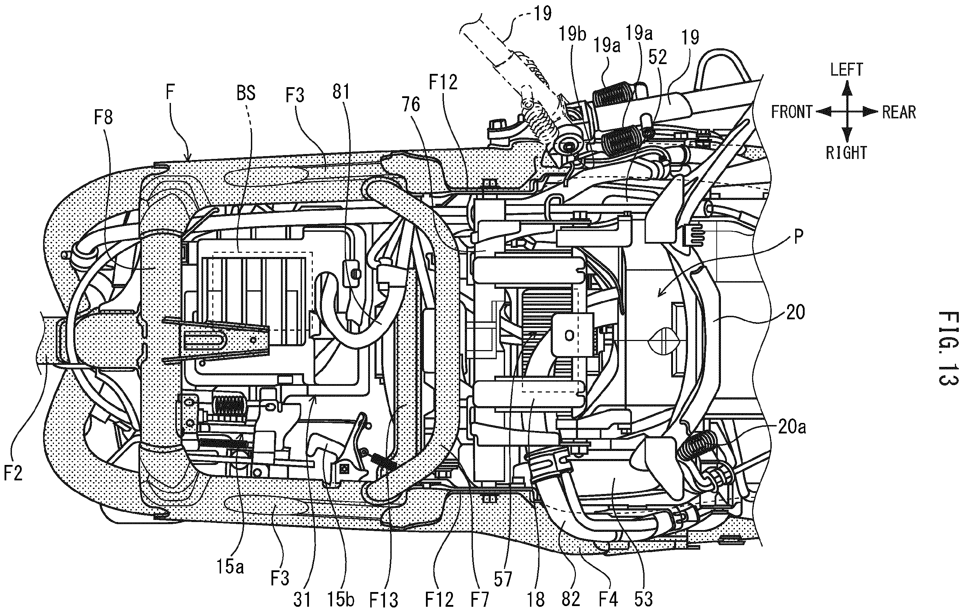

FIG. 13 is a bottom view of the electric-powered motorcycle 1 with the exterior parts removed. The housing case 31 sandwiched between the underframes F3 and housing the sub-battery BS is disposed while being offset to the left side in the vehicle width direction, and an interlocking mechanism 15a for actuating the front and rear brakes according to an operation of the brake pedal 15 is arranged on the right side of the housing case 31 in the vehicle width direction. A harness 81 continued to the sub-battery BS, a fuse box, and the like projects from a bottom portion of the housing case 31 and is guided rearward. A lock lever 15b for holding the brake pedal 15 in an actuated state is arranged behind the interlocking mechanism 15a. A rail member F 13 for supporting the low floor 17 from below is arranged behind the housing case 31.

The link lever 18 supported between the power unit P and the support plates F 12 is arranged at a position overlapping the down regulator 57 provided below the battery case 33 in a vehicle body bottom view. The down regulator 57 enhances a cooling effect by a traveling wind by arranging a cooling fin toward the lower side of the vehicle body. The link lever 18 is pivotally supported to be swingable by the support plates F 12 through a shaft passing through a pivot pipe 76 provided at a front end of the link lever 18. Each of the left-side terminal cover 52 and the right-side terminal cover 53, which are attached to lower portions of the battery case 33, has a bilaterally asymmetrical shape to prevent interference with the link lever 18 and a high-voltage three-phase harness 82. A return spring 20a of the center stand 20 is supported by the power unit P at a position near the right side in the vehicle width direction.

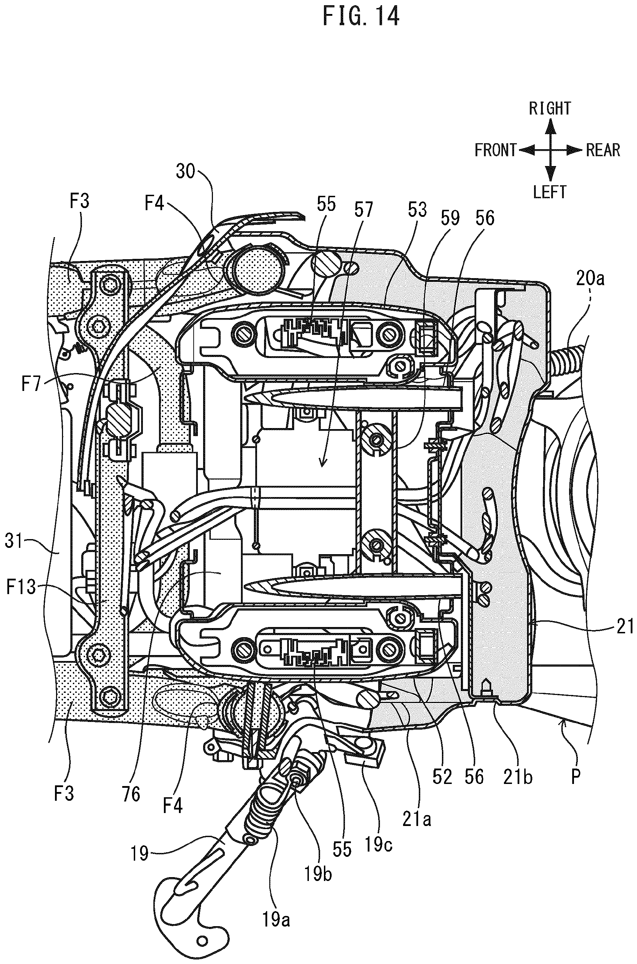

FIG. 14 is a cross-sectional view for illustrating a state obtained by cutting with an approximately horizontal plane so as to pass through the case-side terminals 55. The pivot 19b of the side stand 19 is arranged at a position where the rising frame F4 swells outward in the vehicle width direction and at a position approximately in the middle of the case-side terminal 55 in the longitudinal direction, reduces the load on the side stand 19, and enables the vehicle to be stopped stably.

The cover member 21 covering from the rear of the sides of the battery case 33 up to the rear of the PCU 32 enhances the convenience of the side stand 19 by providing the narrow-width part 21b, and the inside of the wide-width part 21a is utilized as a harness routing space. In addition, the case-side terminals 55 are separated from each other on the outer sides in the vehicle width direction and are projected below the battery case 33. Thus, a space is secured at a lower portion of the battery case 33 near the middle in the vehicle width direction, and the support pipes 56 for supporting the battery case 33 from below, a coupling pipe 59, and the down regulator 57 are arranged by using the space, so that the vehicle body can be downsized.

### [Reference Signs List]

1: Electric-powered motorcycle (saddled electric-powered vehicle)
2: Steering handlebar
17: Low floor
19: Side stand
19b: Pivot of side stand
29: Seat
32: PCU
33: Battery case
34a: Standing wall part
36: Operation lever
36c: Separator part
40: Rear carrier
42: Pressing holder
42c: Rubber portion
46: Contactor
47: Connector
49: Battery-side terminal
51: Deep groove part
54: Partition
55: Case-side terminal
57: Down regulator
80: Junction box
36g: First axis
71: Second axis
72: Link arm (arm member)
73: Third axis
B: Battery
F3: Underframe
F4: Rising frame
F5: Cross pipe
L: Link mechanism

## Claims

1. A saddled electric-powered vehicle (1) configured by including approximately rectangular parallelepiped batteries (B), a battery case (33) in which the batteries (B) are housed, battery-side terminals (49) provided on bottom surfaces of the batteries (B), and case-side terminals (55) engaged with the battery-side terminals (49),
wherein the battery case (33) is arranged below a seat (29) of the saddled electric-powered vehicle (1),
pressing holders (42) that press the batteries (B) housed in the battery case (33) from above are provided,
the pressing holders (42) are provided while making a front and rear pair for each battery (B),
**characterized in that**
the two batteries (B) are disposed next to each other in a vehicle width direction,
wherein an operation lever (36) for moving the case-side terminals (55) up and down to connect or separate the battery-side terminals (49) and the case-side terminals (55) to/from each other by being operated in an up-and-down direction of a vehicle body is provided, and
the operation lever (36) is arranged at a position in a middle in the vehicle width direction between the two batteries (B).

2. The saddled electric-powered vehicle (1) according to claim 1,
wherein the battery case (33) has a bottomed box shape with an upper side open.

3. The saddled electric-powered vehicle (1) according to claim 1 or 2,
wherein each pressing holder (42) is provided with a rubber portion (42c) brought into contact with an upper surface of each battery (B).

4. The saddled electric-powered vehicle (1) according to any one of claims 1 to 3,
wherein a rear carrier (40) for loading baggage (C) is arranged behind the seat (29).

5. The saddled electric-powered vehicle (1) according to any one of claims 1 to 4,
wherein an upper edge of the battery case (33) is constituted using a standing wall part (34a) that is in close contact with a lower surface of the seat (29), and,
when the batteries (B) are housed in the battery case (33), the surface of each battery (B) on an outer side in the vehicle width direction and the standing wall part (34a) are disposed close to each other in a vehicle body plan view.

6. The saddled electric-powered vehicle (1) according to claim 5,
wherein the standing wall part (34a) is formed to descend forward in a vehicle body side view.

7. The saddled electric-powered vehicle (1) according to any one of claims 1 to 6,
wherein each battery (B) is formed in an approximately rectangular parallelepiped shape that is long in the up-and-down direction and is housed in the battery case (33) while being inclined rearward with respect to a vertical direction, and
a housing part (51) is provided at an upper portion of a front end of the battery case (33).

## Patentansprüche

1. Elektrisch angetriebenes Sattelsitzfahrzeug (1), das ausgestaltet ist, indem es aufweist in etwa rechteckige parallelepide Batterien (B), ein Batteriegehäuse (33), in dem die Batterien (B) aufgenommen sind, batterieseitige Anschlüsse (49), die an den Bodenflächen der Batterien (B) vorgesehen sind, und gehäuseseitige Anschlüsse (55), die in die batterieseitigen Anschlüsse (49) eingegriffen sind,
wobei das Batteriegehäuse (33) unter einem Sitz (29) des elektrisch angetriebenen Sattelsitzfahrzeugs (1) angeordnet ist,
wobei Presshalterungen (42) vorgesehen sind, die die im Batteriegehäuse (33) aufgenommenen Batterien (B) von oben pressen,
wobei die Presshalterungen (42) vorgesehen sind, während sie ein vorderes und hinteres Paar von einer jeden Batterie (B) bilden,
**dadurch gekennzeichnet, dass**
die zwei Batterien (B) nebeneinander in der Fahrzeugbreitenrichtung angeordnet sind, wobei
ein Betätigungshebel (36) zum Bewegen der gehäuseseitigen Anschlüsse (55) nach oben und unten vorgesehen ist, um die batterieseitigen Anschlüsse (49) und die gehäuseseitigen Anschlüsse (55) miteinander zu verbinden oder voneinander zu trennen, indem er in einer Richtung einer Fahrzeugkarosserie nach oben und unten betätigt wird, und
der Betätigungshebel (36) an einer Position in der Mitte der Fahrzeugbreitenrichtung zwischen den zwei Batterien (B) angeordnet ist.

2. Elektrisch angetriebenes Sattelsitzfahrzeug (1) nach Anspruch 1,
wobei das Batteriegehäuse (33) einer Kastenform mit Boden mit einer geöffneten Oberseite hat.

3. Elektrisch angetriebenes Sattelsitzfahrzeug (1) nach Anspruch 1 oder 2,
wobei eine jede Presshalterung (42) mit einem Gummibereich (42c) vorgesehen ist, der mit einer Oberseite von einer jeden Batterie (B) in Kontakt gebracht wird.

4. Elektrisch angetriebenes Sattelsitzfahrzeug (1) nach einem der Ansprüche 1 bis 3, wobei ein rückseitiger Träger (40) zum Laden von Gepäck (C) hinter dem Sitz (29) angeordnet ist.

5. Sattelsitzfahrzeug (1) nach einem der Ansprüche 1 bis 4,
wobei eine Oberkante des Batteriegehäuses (33) gebildet wird, indem eine stehende Wandkomponente (34a) verwendet wird, die sich in engem Kontakt mit einer unteren Fläche des Sitzes (29) befindet, und
wobei, wenn die Batterien (B) im Batteriegehäuse (33) aufgenommen sind,
die Oberfläche einer jeden Batterie (B) an einer Außenseite in der Fahrzeugbreitenrichtung und die stehende Wandkomponente (34a) nahe zueinander in einer Draufsicht auf die Fahrzeugkarosserie angeordnet sind.

6. Elektrisch angetriebenes Sattelsitzfahrzeug (1) nach Anspruch 5,
wobei die stehende Wandkomponente (34a) ausgebildet ist, um in einer Seitenansicht der Fahrzeugkarosserie nach vorne abzufallen.

7. Elektrisch angetriebenes Sattelsitzfahrzeug (1) nach einem der Ansprüche 1 bis 6, wobei eine jede Batterie (B) in einer annähernd rechteckigen parallelepiden Form ausgebildet ist, die in der Richtung nach oben und unten lang ist und im Batteriegehäuse (33) aufgenommen ist, während sie bezüglich einer vertikalen Richtung nach hinten geneigt ist, und
eine Gehäusekomponente (51) an einem oberen Bereich des vorderen Endes des Batteriegehäuses (33) vorgesehen ist.

## Revendications

1. Véhicule électrique à selle (1) configuré en comportant des batteries parallélépipédiques approximativement rectangulaires (B), un boîtier de batteries (33) dans lequel les batteries (B) sont logées, des bornes côté batteries (49) prévues sur des surfaces inférieures des batteries (B), et des bornes côté boîtier (55) engagées avec les bornes côté batteries (49),
dans lequel le boîtier de batteries (33) est agencé au-dessous d'un siège (29) du véhicule électrique à selle (1),
des supports à pression (42) qui pressent les batteries (B) logées dans le boîtier de batteries (33) par le haut sont prévus,
les supports à pression (42) sont prévus en réalisant une paire avant et arrière pour chaque batterie (B),
**caractérisé en ce que**
les deux batteries (B) sont disposées l'une à côté de l'autre dans une direction de largeur de véhicule,
dans lequel
un levier d'actionnement (36) pour déplacer les bornes côté boîtier (55) vers le haut et vers le bas pour relier les bornes côté batteries (49) et les bornes côté boîtier (55) les unes aux autres ou les séparer les unes des autres en étant actionné dans une direction vers le haut et vers le bas d'une carrosserie de véhicule est prévu, et
le levier d'actionnement (36) est agencé à une position à un milieu dans la direction de largeur de véhicule entre les deux batteries (B).

2. Véhicule électrique à selle (1) selon la revendication 1,
dans lequel le boîtier de batteries (33) présente une forme de boîte avec un fond avec une ouverture de côté supérieur.

3. Véhicule électrique à selle (1) selon la revendication 1 ou 2,
dans lequel chaque support à pression (42) est doté d'une partie en caoutchouc (42c) mise en contact avec une surface supérieure de chaque batterie (B).

4. Véhicule électrique à selle (1) selon l'une quelconque des revendications 1 à 3,
dans lequel un porte-bagage arrière (40) pour charger un bagage (C) est agencé derrière le siège (29).

5. Véhicule électrique à selle (1) selon l'une quelconque des revendications 1 à 4,
dans lequel un bord supérieur du boîtier de batteries (33) est constitué en utilisant une partie de paroi verticale (34a) qui est en contact étroit avec une surface inférieure du siège (29), et
lorsque les batteries (B) sont logées dans le boîtier de batteries (33), la surface de chaque batterie (B) sur un côté extérieur dans la direction de largeur de véhicule et la partie de paroi verticale (34a) sont disposées à proximité l'une de l'autre dans une vue en plan de carrosserie de véhicule.

6. Véhicule électrique à selle (1) selon la revendication 5,
dans lequel la partie de paroi verticale (34a) est formée pour descendre vers l'avant dans une vue de côté de carrosserie de véhicule.

7. Véhicule électrique à selle (1) selon l'une quelconque des revendications 1 à 6,
dans lequel chaque batterie (B) est formée dans une forme parallélépipédique approximativement rectangulaire qui est longue dans la direction vers l'avant et vers l'arrière et est logée dans le boîtier de batteries (33) en étant inclinée vers l'arrière par rapport à une direction verticale, et
une partie de logement (51) est prévue au niveau d'une partie supérieure d'une extrémité avant du boîtier de batteries (33).
